# EUROPÄISCHE PATENTANMELDUNG

(11) **EP 4 488 078 A1**
(43) Veröffentlichungstag der Anmeldung: **08.01.2025**
(21) Anmeldenummer: 24181556.2
(22) Anmeldetag: 12.06.2024
(51) Int. Cl.: B60C 23/00, B60C 23/04

(54) **VERFAHREN ZUM BETREIBEN EINES FAHRZEUGREIFENS**

(30) Priorität: 03.07.2023 DE 102023206258
(71) Anmelder: Continental Reifen Deutschland GmbH, 30175 Hannover (DE)
(72) Erfinder: Sahlmüller, Baldo, 30175 Hannover (DE)
(74) Vertreter: Continental Corporation

(57) **Zusammenfassung**

Die Erfindung betrifft ein Verfahren zum Betreiben eines Fahrzeugreifens (1), aufweisend die folgenden Schritte:
- Bereitstellen eines Fahrzeugreifens (1);
- Bereitstellen einer Auswertevorrichtung (3);
- Bestimmen einer Eigenschaft einer Umgebung (4) des Fahrzeugreifens (1);
- Übertragen eines Signals an die Auswertevorrichtung (3), wobei das Signal eine Information über die Eigenschaft der Umgebung (4) des Fahrzeugreifens (1) enthält;
- Bestimmen einer Ist-Reifeneigenschaft des Fahrzeugreifens (1);
- Übertragen eines Signals an die Auswertevorrichtung (3), wobei das Signal eine Information über die Ist-Reifeneigenschaft enthält;
- Vergleichen der Ist-Reifeneigenschaft mit der Eigenschaft der Umgebung (4) des Fahrzeugreifens (1) mittels der Auswertevorrichtung (3);
- Erzeugen einer Information über das Vergleichen der Ist-Reifeneigenschaft mit der Eigenschaft der Umgebung (4) des Fahrzeugreifens (1) mittels der Auswertevorrichtung (3).

## Beschreibung

Die Erfindung betrifft ein Verfahren zum Betreiben eines Fahrzeugreifens.

Die Erfindung geht aus von einem Verfahren zum Betreiben eines Fahrzeugreifens, aufweisend die folgenden Schritte:
- Bereitstellen eines Fahrzeugreifens;
- Bereitstellen einer Auswertevorrichtung;
- Bestimmen einer Eigenschaft einer Umgebung des Fahrzeugreifens;
- Übertragen eines Signals an die Auswertevorrichtung, wobei das Signal eine Information über die Eigenschaft der Umgebung des Fahrzeugreifens enthält.

Bei der Umgebung des Fahrzeugreifens handelt es sich um die räumliche Umgebung des Fahrzeugreifens. Insbesondere kann es sich gemäß Ausführungsformen der vorliegenden Erfindung bei der räumlichen Umgebung des Fahrzeugreifens um eine Umgebung in einer räumlichen Entfernung von 0,01 m bis zu 10000 m um den Fahrzeugreifen herum handeln, also beispielsweise 0,01 m bis zu 10000 m um einen geometrischen Mittelpunkt des Fahrzeugreifens herum.

Bei der Auswertevorrichtung handelt es sich vorzugsweise um eine Computervorrichtung.

Nach Auswertung des Signals, wobei das Signal eine Information über die Eigenschaft der Umgebung des Fahrzeugreifens enthält, mittels der Auswertevorrichtung kann ein Betreiben des Fahrzeugreifens in Abhängigkeit dieser Auswertung erfolgen.

Bei dem Signal handelt es sich insbesondere um ein elektromagnetisches Signal. Die Auswertevorrichtung weist insbesondere Sende- und/oder Empfangsmittel zum Senden beziehungsweise Empfangen elektromagnetischer Signale auf.

Bei dem Fahrzeugreifen handelt es sich insbesondere um einen PKW-Fahrzeugreifen, um einen LKW-Fahrzeugreifen oder um einen Zweirad-Fahrzeugreifen. Der Fahrzeugreifen ist zur Anwendung und Nutzung an einem Fahrzeug vorgesehen.

Aus dem Stand der Technik sind Verfahren zum Betreiben eines Fahrzeugreifens bekannt. Dabei ist es aus dem Stand der Technik auch bekannt, dass eine Eigenschaft einer Umgebung des Fahrzeugreifens bestimmt wird und das ein Signal an eine Auswertevorrichtung, wobei das Signal eine Information über die Eigenschaft der Umgebung des Fahrzeugreifens enthält.

Die aus dem aus dem Stand der Technik bekannten Verfahren könnten möglicherweise nicht zu einem optimalen Betrieb des Fahrzeugreifens führen. Hintergrund des Umstandes, wonach ein optimaler Betrieb des Fahrzeugreifens nicht möglich sein könnte ist, dass ein Betrieb des Fahrzeugreifens ausschließlich in Abhängigkeit der Eigenschaft einer Umgebung des Fahrzeugreifens erfolgen könnte. Technische Charakteristika des Fahrzeugreifens oder spezifische Betriebsweisen des Fahrzeugreifens selbst könnten hingegen bei seinem Betrieb unberücksichtigt bleiben.

Der Erfindung liegt daher die Aufgabe zugrunde, ein Verfahren zum Betreiben eines Fahrzeugreifens bereitzustellen, wobei mittels des Verfahrens ein verbesserter Betrieb des Fahrzeugreifens ermöglicht wird.

Gelöst wird die erfindungsgemäß gestellte Aufgabe dadurch, dass das Verfahren die folgenden weiteren Schritte aufweist:
- Bestimmen einer Ist-Reifeneigenschaft des Fahrzeugreifens;
- Übertragen eines Signals an die Auswertevorrichtung, wobei das Signal eine Information über die Ist-Reifeneigenschaft enthält;
- Vergleichen der Ist-Reifeneigenschaft mit der Eigenschaft der Umgebung des Fahrzeugreifens mittels der Auswertevorrichtung;
- Erzeugen einer Information über das Vergleichen der Ist-Reifeneigenschaft mit der Eigenschaft der Umgebung des Fahrzeugreifens mittels der Auswertevorrichtung.

Bei diesem Signal handelt es sich vorzugsweise um ein elektromagnetisches Signal.

Sowohl mindestens ein technisches Charakteristikum des Fahrzeugreifens als auch die spezifische Betriebsweise des Fahrzeugreifens sind beispielhaft für die Ist-Reifeneigenschaft.

Durch den erfindungsgemäßen Umstand, wonach das Verfahren die folgenden weiteren Schritte aufweist:
- Bestimmen einer Ist-Reifeneigenschaft des Fahrzeugreifens;
- Übertragen eines Signals an die Auswertevorrichtung, wobei das Signal eine Information über die Ist-Reifeneigenschaft enthält;
- Vergleichen der Ist-Reifeneigenschaft mit der Eigenschaft der Umgebung des Fahrzeugreifens mittels der Auswertevorrichtung;
- Erzeugen einer Information über das Vergleichen der Ist-Reifeneigenschaft mit der Eigenschaft der Umgebung des Fahrzeugreifens mittels der Auswertevorrichtung,
wird eine Information erzeugt, in deren Abhängigkeit ein Betreiben des Fahrzeugreifens möglich ist, wobei die Information anhand eines Vergleichens der Ist-Reifeneigenschaft mit der Eigenschaft der Umgebung des Fahrzeugreifens erzeugt worden ist. Mittels dieser Information können somit die Ist-Reifeneigenschaft und die Eigenschaft der Umgebung des Fahrzeugreifen berücksichtigt werden. Somit kann der Fahrzeugreifen beispielsweise auch in Abhängigkeit technische Charakteristika des Fahrzeugreifens oder spezifische Betriebsweisen des Fahrzeugreifens betrieben werden.

Somit wird ein verbessertes Verfahren zum Betreiben eines Fahrzeugreifens bereitgestellt.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung handelt es sich bei der Ist-Reifeneigenschaft des Fahrzeugreifens um eine Temperatur, die in einem Innenraum des Fahrzeugreifens herrscht, und/oder um einen Druck, der in einem Innenraum des Fahrzeugreifens herrscht.

Gemäß einer nächsten vorzugsweisen Ausgestaltungsform der vorliegenden Erfindung wird die Ist-Reifeneigenschaft des Fahrzeugreifens mittels einer Sensorvorrichtung ermittelt und ein Signal wird von der Sensorvorrichtung an die Auswertevorrichtung übertragen, wobei das Signal die Information über die mittels der Sensorvorrichtung ermittelte Ist-Reifeneigenschaft des Fahrzeugreifens enthält. Das Signal wir insbesondere elektromagnetisch übertragen von der Sensorvorrichtung, die vorzugsweise elektromagnetische Sende- und Empfangsmittel aufweist, an die Auswertevorrichtung übertragen.

Insbesondere handelt es sich bei der Sensorvorrichtung beispielsweise um eine innerhalb des Fahrzeugreifens angeordnete Sensorvorrichtung, vorzugsweise um eine Drucksensorvorrichtung und/oder um eine Temperatursensorvorrichtung.

Gemäß einer nächsten vorzugsweisen Ausgestaltungsform der vorliegenden Erfindung handelt es sich bei der Ist-Reifeneigenschaft des Fahrzeugreifens um eine Art des Fahrzeugreifens und/oder um eine Profilart des Fahrzeugreifens und/oder um einen Profilzustand des Fahrzeugreifens und/oder um einen Lastindex des Fahrzeugreifens und/oder um einen Geschwindigkeitsindex des Fahrzeugreifens.

Bei der Art des Fahrzeugreifens handelt es sich beispielsweise darum, ob es sich um einen Sommerfahrzeugreifen, einen Winterfahrzeugreifen oder einen Ganzjahresfahrzeugreifen handelt. Bei dem Lastindex oder auch Tragfähigkeitsindex handelt es sich um die maximal zulässige Last des Fahrzeugreifens. Bei dem Geschwindigkeitsindex handelt es sich um die maximal zulässige Geschwindigkeit, mit der der Fahrzeugreifen betrieben werden darf. Der Profilzustand betrifft insbesondere einen mechanischen Abrieb des Fahrzeugreifens.

Gemäß einer nächsten vorzugsweisen Ausgestaltungsform der vorliegenden Erfindung wird eine Information über die Art des Fahrzeugreifens und/oder über die Profilart des Fahrzeugreifens und/oder über den Profilzustand des Fahrzeugreifens und/oder über den Lastindex des Fahrzeugreifens und/oder den Geschwindigkeitsindex des Fahrzeugreifens von einer Sensorvorrichtung des Fahrzeugreifens oder von einer Reifenidentifikationsvorrichtung des Fahrzeugreifens an die Auswertevorrichtung übertragen.

Bei der Reifenidentifikationsvorrichtung handelt es sich beispielsweise um eine RFID-Vorrichtung, die insbesondere innerhalb des Fahrzeugreifens oder an dem Fahrzeugreifen angeordnet ist. RFID bedeutet Radio Frequency Identification.

Gemäß einer nächsten vorzugsweisen Ausgestaltungsform der vorliegenden Erfindung handelt es sich bei der Eigenschaft der Umgebung des Fahrzeugreifens um eine Wetterbedingung am Ort des Fahrzeugreifens. Die Wetterbedingung betrifft beispielsweise die Temperatur, den Luftdruck, die Luftfeuchtigkeit den Umstand, ob und wieviel es regnet und/oder einen möglichen Schneefall.

Gemäß einer nächsten vorzugsweisen Ausgestaltungsform der vorliegenden Erfindung wird die Wetterbedingung in Abhängigkeit von Wetterdaten bestimmt, wobei die Wetterdaten an die Auswertevorrichtung übertragen werden, insbesondere mittels eines elektromagnetischen Signals. Bei den Wetterdaten handelt es sich beispielsweise um Wetterdaten aus dem Internet oder Wetterdaten eines elektronischen Wetterservices.

Gemäß einer nächsten vorzugsweisen Ausgestaltungsform der vorliegenden Erfindung wird die Wetterbedingung in Abhängigkeit einer sensorischen Messung einer Temperatur am Ort des Fahrzeugreifens und/oder einer Luftfeuchtigkeit am Ort des Fahrzeugreifens mittels einer Umweltsensorvorrichtung bestimmt und ein Signal wird von der Umweltsensorvorrichtung an die Auswertevorrichtung übertragen, wobei es sich insbesondere um ein elektromagnetisches Signal handelt, wobei dieses Signal eine Information über die sensorische Messung der Temperatur am Ort des Fahrzeugreifens und/oder der Luftfeuchtigkeit am Ort des Fahrzeugreifens enthält.

Insbesondere für den Fall, wonach die die Wetterbedingung in Abhängigkeit von Wetterdaten bestimmt worden ist, ist eine Plausibilitätsprüfung dieser Wetterdaten in Abhängigkeit der sensorisch erfassten Wetterbedingungen, wie beispielsweise der Temperatur am Ort des Fahrzeugreifens und/oder der Luftfeuchtigkeit am Ort des Fahrzeugreifens, möglich. Vorzugsweise wird diese Plausibilitätsprüfung mittels der Auswertevorrichtung vorgenommen.

Gemäß einer nächsten vorzugsweisen Ausgestaltungsform der vorliegenden Erfindung wird die Wetterbedingung in Abhängigkeit des Ortes des Fahrzeugreifens und eines Zeitpunktes, für den die Wetterbedingung bestimmt werden soll, bestimmt. Der Ort des Fahrzeugreifens kann zum Beispiel anhand globaler Positionierungsdaten und/oder anhand Funkzellen-Daten bestimmt werden. Der Zeitpunkt kann zum Beispiel anhand eines kalendarischen Datums und/oder anhand einer Uhrzeit bestimmt werden.

Durch den erfindungsgemäßen Umstand, wonach die Wetterbedingung in Abhängigkeit des Ortes des Fahrzeugreifens und eines Zeitpunktes, für den die Wetterbedingung bestimmt werden soll, bestimmt wird, kann insbesondere eine Bestimmung der Wetterbedingung in Abhängigkeit der aktuellen Jahreszeit vorgenommen werden. In Abhängigkeit dieser Bestimmung kann beispielsweise ermittelt werden, ob der Einsatz eines Winterreifens erforderlich ist.

Anhand des Ortes des Fahrzeugreifens und des Zeitpunktes, für den die Wetterbedingung bestimmt werden soll, können die Wetterdaten plausibilisiert werden. Insbesondere werden die Wetterdaten in Abhängigkeit Ortes des Fahrzeugreifens und eines Zeitpunktes, für den die Wetterbedingung bestimmt werden soll, mittels der Auswertevorrichtung geprüft.

Gemäß einer nächsten vorzugsweisen Ausgestaltungsform der vorliegenden Erfindung handelt es sich bei der Eigenschaft der Umgebung um eine Fahrgeschwindigkeit des Fahrzeugs, an dem der Fahrzeugreifen verwendet wird.

Gemäß einer nächsten vorzugsweisen Ausgestaltungsform der vorliegenden Erfindung wird die Fahrgeschwindigkeit des Fahrzeugs in Abhängigkeit von globalen Positionierungsdaten des Fahrzeugs bestimmt.

Gemäß einer nächsten vorzugsweisen Ausgestaltungsform der vorliegenden Erfindung handelt es sich bei der Eigenschaft der Umgebung des Fahrzeugreifens um eine Radlast, um eine Achslast und/oder um eine Gesamtmasse des Fahrzeugs, an dem der Fahrzeugreifen verwendet wird.

Gemäß einer nächsten vorzugsweisen Ausgestaltungsform der vorliegenden Erfindung handelt es sich bei der Eigenschaft der Umgebung des Fahrzeugreifens um die Wetterbedingung am Ort des Fahrzeugreifens und/oder um die Fahrgeschwindigkeit des Fahrzeugs, an dem der Fahrzeugreifen verwendet wird und/oder um die Radlast, um die Achslast, und/oder um die Gesamtmasse des Fahrzeugs, an dem der Fahrzeugreifen verwendet wird.

Gemäß einer nächsten vorzugsweisen Ausgestaltungsform der vorliegenden Erfindung wird in Abhängigkeit der Information über das Vergleichen der Ist-Reifeneigenschaft mit der Eigenschaft der Umgebung des Fahrzeugreifens eine Soll-Reifeneigenschaft des Fahrzeugreifens bestimmt.

Bei der Soll-Reifeneigenschaft handelt es sich beispielsweise um einen Reifentyp, zum Beispiel um einen ein Sommerfahrzeugreifen, einen Winterfahrzeugreifen oder um einen Alljahresfahrzeugreifen. Bei der Soll-Reifeneigenschaft handelt es sich alternativ oder zusätzlich beispielsweise um einen einzustellenden Reifeninnendruck, der angesichts der gegebenen Wetterbedingen vorteilhafter für den Betrieb des Fahrzeugreifens ist als ein aktuell herrschender Reifeninnendruck. Die Bestimmung der Soll-Reifeneigenschaft des Fahrzeugreifens erfolgt insbesondere mittels der Auswertevorrichtung. Bei der Soll-Reifeneigenschaft handelt es sich beispielsweise alternativ oder zusätzlich um einen Mindest-Lastindex und/oder einen Mindest-Geschwindigkeitsindex.

Gemäß einer nächsten vorzugsweisen Ausgestaltungsform der vorliegenden Erfindung weist das Verfahren den weiteren Schritt auf:
- Aussenden eines Signals, beispielsweise eines elektromagnetischen Signals, mittels der Auswertevorrichtung in Abhängigkeit der Information über das Vergleichen der Ist-Reifeneigenschaft mit der Eigenschaft der Umgebung des Fahrzeugreifens, wobei das Signal die Information über das Vergleichen der Ist-Reifeneigenschaft mit der Eigenschaft der Umgebung des Fahrzeugreifens enthält, wobei das Signal insbesondere für den Fall, wonach in Abhängigkeit der Information über das Vergleichen der Ist-Reifeneigenschaft mit der Eigenschaft der Umgebung des Fahrzeugreifens eine Soll-Reifeneigenschaft des Fahrzeugreifens bestimmt worden ist, auch eine Information über die Soll-Reifeneigenschaft enthält.

Durch den erfindungsgemäßen Umstand, wonach das Aussenden eines Signals mittels der Auswertevorrichtung in Abhängigkeit der Information über das Vergleichen der Ist-Reifeneigenschaft mit der Eigenschaft der Umgebung des Fahrzeugreifens, wobei das Signal die Information über das Vergleichen der Ist-Reifeneigenschaft mit der Eigenschaft der Umgebung des Fahrzeugreifens enthält, erfolgt, kann ein anlassabhängiges Aussenden des Signals erfolgen. Ein anlassabhängiges und also nichtständiges Senden des Signals ist energetisch günstiger als ein ständiges Senden des Signals.

Durch den erfindungsgemäßen Umstand, wonach in Abhängigkeit der Information über das Vergleichen der Ist-Reifeneigenschaft mit der Eigenschaft der Umgebung des Fahrzeugreifens eine Soll-Reifeneigenschaft des Fahrzeugreifens bestimmt worden ist, das Signal auch eine Information über die Soll-Reifeneigenschaft enthält, können beispielsweise in Abhängigkeit dieses Signals ein Fahrzeugreifenwechsel an einem Fahrzeug oder eine Druckanpassung des Fahrzeugreifens vorgenommen werden, beispielsweise kann für den Fall, wonach es sich bei dem Fahrzeugreifen um einen Sommerfahrzeugreifen handelt, dieser Fahrzeugreifen von einem Fahrzeug entfernt und durch einen Winterfahrzeugreifen ersetzt werden.

Gemäß einer nächsten vorzugsweisen Ausgestaltungsform der vorliegenden Erfindung weist das Verfahren den weiteren Schritt auf:
- Empfangen des Signals mittels einer Verarbeitungsvorrichtung, wobei die Verarbeitungsvorrichtung eingerichtet ist, die Soll-Reifeneigenschaft des Fahrzeugreifens in Abhängigkeit des Signals herbeizuführen;
- Herbeiführen der Soll-Reifeneigenschaft mittels der Verarbeitungsvorrichtung.

Ein Fahrzeugreifenwechsel an einem Fahrzeug oder eine Druckanpassung des Fahrzeugreifens vorgenommen werden können beispielsweise automatisiert mittels der Verarbeitungsvorrichtung, bei der es sich insbesondere um einen Roboter handelt, vorgenommen werden.

Gemäß einer nächsten vorzugsweisen Ausgestaltungsform der vorliegenden Erfindung handelt es sich bei der Verarbeitungsvorrichtung um eine Vorrichtung zur Veränderung eines Drucks in dem Innenraum des Fahrzeugreifens.

Weitere Vorteile, Merkmale und Einzelheiten, auf die die Erfindung in ihrem Umfang aber nicht beschränkt ist, werden nun anhand der Zeichnung näher beschrieben.

Es zeigt:

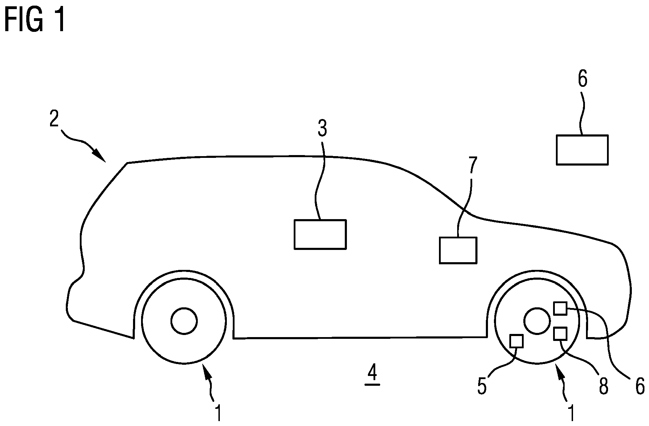

Fig. 1: Eine schematische Darstellung eines Fahrzeugs, an dem ein Fahrzeugreifen verwendet wird.

In der Figur 1 ist ein Fahrzeug 2 mit einem Fahrzeugreifen 1 schematisch dargestellt. Gemäß der Darstellung in der Figur 1 weist das Fahrzeug 2 eine Mehrzahl an Fahrzeugreifen 1 auf.

Erfindungsgemäß wird eine Auswertevorrichtung 3 bereitgestellt. Gemäß der Darstellung in der Figur 1 ist die Auswertevorrichtung 3 Bestandteil des Fahrzeugs 2.

Erfindungsgemäß erfolgen die Schritte:
- Bestimmen einer Eigenschaft einer Umgebung 4 des Fahrzeugreifens 1;
- Übertragen eines Signals an die Auswertevorrichtung 3, wobei das Signal eine Information über die Eigenschaft der Umgebung 4 des Fahrzeugreifens 1 enthält;
- Bestimmen einer Ist-Reifeneigenschaft des Fahrzeugreifens 1;
- Übertragen eines Signals an die Auswertevorrichtung 3, wobei das Signal eine Information über die Ist-Reifeneigenschaft enthält;
- Vergleichen der Ist-Reifeneigenschaft mit der Eigenschaft der Umgebung 4 des Fahrzeugreifens 1 mittels der Auswertevorrichtung 3;
- Erzeugen einer Information über das Vergleichen der Ist-Reifeneigenschaft mit der Eigenschaft der Umgebung 4 des Fahrzeugreifens 1 mittels der Auswertevorrichtung 3.

Die Ist-Reifeneigenschaft des Fahrzeugreifens 1 wird insbesondere mittels einer Sensorvorrichtung 5 ermittelt. Dabei wird ein Signal von der Sensorvorrichtung 5 an die Auswertevorrichtung 3 übertragen, wobei das Signal die Information über die mittels der Sensorvorrichtung 5 ermittelte Ist-Reifeneigenschaft des Fahrzeugreifens 1 enthält.

Insbesondere erfolgt der Schritt: Aussenden eines Signals mittels der Auswertevorrichtung 3 in Abhängigkeit der Information über das Vergleichen der Ist-Reifeneigenschaft mit der Eigenschaft der Umgebung 4 des Fahrzeugreifens 1, wobei das Signal die Information über das Vergleichen der Ist-Reifeneigenschaft mit der Eigenschaft der Umgebung 4 des Fahrzeugreifens 1 enthält, wobei das Signal insbesondere für den Fall, wonach in Abhängigkeit der Information über das Vergleichen der Ist-Reifeneigenschaft mit der Eigenschaft der Umgebung 4 des Fahrzeugreifens 1 eine Soll-Reifeneigenschaft des Fahrzeugreifens 1 bestimmt worden ist, auch eine Information über die Soll-Reifeneigenschaft enthält.

Insbesondere erfolgt dann weiter der Schritt: Empfangen des Signals mittels einer Verarbeitungsvorrichtung 6, wobei die Verarbeitungsvorrichtung 6 eingerichtet ist, die Soll-Reifeneigenschaft des Fahrzeugreifens 1 in Abhängigkeit des Signals herbeizuführen.

Bei der Verarbeitungsvorrichtung 6 kann es sich beispielsweise um eine bezüglich des Fahrzeugreifens 1 und bezüglich des Fahrzeugs 2 externe Verarbeitungsvorrichtung 6 handeln. Alternativ kann es sich bei der Verarbeitungsvorrichtung 6 um eine Vorrichtung 6 zur Veränderung eines Drucks in dem Innenraum des Fahrzeugreifens 1 handeln, wobei diese Vorrichtung 6 insbesondere in dem Innenraum des Fahrzeugreifens 1 angeordnet ist.

Bei der Eigenschaft der Umgebung 4 des Fahrzeugreifens 1 handelt es sich beispielsweise um eine Wetterbedingung am Ort des Fahrzeugreifens 1. Die Wetterbedingung kann vorzugsweise in Abhängigkeit einer sensorischen Messung einer Temperatur am Ort des Fahrzeugreifens 1 und/oder einer Luftfeuchtigkeit am Ort des Fahrzeugreifens 1 mittels einer Umweltsensorvorrichtung 7 bestimmt werden, wobei ein Signal von der Umweltsensorvorrichtung 7 an die Auswertevorrichtung 3 übertragen wird, wobei dieses Signal eine Information über die sensorische Messung der Temperatur am Ort des Fahrzeugreifens 1 und/oder der Luftfeuchtigkeit am Ort des Fahrzeugreifens 1 enthält.

Gemäß der Darstellung in der Figur 1 ist die Umweltsensorvorrichtung 7 beispielsweise Bestandteil des Fahrzeugs 2.

Der Fahrzeugreifen 1 weist insbesondere eine Reifenidentifikationsvorrichtung 8 auf, wobei in der Reifenidentifikationsvorrichtung 8 eine Information über eine Ist-Reifeneigenschaft des Fahrzeugreifens 1 auslesbar gespeichert ist.

### Bezugszeichenliste

- 1: Fahrzeugreifen
- 2: Fahrzeug
- 3: Auswertevorrichtung
- 4: Umgebung des Fahrzeugreifens
- 5: Sensorvorrichtung
- 6: Verarbeitungsvorrichtung
- 7: Umweltsensorvorrichtung
- 8: Reifenidentifikationsvorrichtung

## Patentansprüche

1. Verfahren zum Betreiben eines Fahrzeugreifens (1), aufweisend die folgenden Schritte:
- Bereitstellen eines Fahrzeugreifens (1);
- Bereitstellen einer Auswertevorrichtung (3);
- Bestimmen einer Eigenschaft einer Umgebung (4) des Fahrzeugreifens (1);
- Übertragen eines Signals an die Auswertevorrichtung (3), wobei das Signal eine Information über die Eigenschaft der Umgebung (4) des Fahrzeugreifens (1) enthält;
**gekennzeichnet durch die weiteren Schritte:**
- Bestimmen einer Ist-Reifeneigenschaft des Fahrzeugreifens (1);
- Übertragen eines Signals an die Auswertevorrichtung (3), wobei das Signal eine Information über die Ist-Reifeneigenschaft enthält;
- Vergleichen der Ist-Reifeneigenschaft mit der Eigenschaft der Umgebung (4) des Fahrzeugreifens (1) mittels der Auswertevorrichtung (3);
- Erzeugen einer Information über das Vergleichen der Ist-Reifeneigenschaft mit der Eigenschaft der Umgebung (4) des Fahrzeugreifens (1) mittels der Auswertevorrichtung (3).

2. Verfahren nach Anspruch 1, **dadurch gekennzeichnet, dass** es sich bei der Ist-Reifeneigenschaft des Fahrzeugreifens (1) um eine Temperatur, die in einem Innenraum des Fahrzeugreifens (1) herrscht, und/oder um einen Druck, der in einem Innenraum des Fahrzeugreifens (1) herrscht, handelt.

3. Verfahren nach dem vorhergehenden Anspruch, **dadurch gekennzeichnet, dass** die Ist-Reifeneigenschaft des Fahrzeugreifens (1) mittels einer Sensorvorrichtung (5) ermittelt wird und ein Signal von der Sensorvorrichtung (5) an die Auswertevorrichtung (3) übertragen wird, wobei das Signal die Information über die mittels der Sensorvorrichtung (5) ermittelte Ist-Reifeneigenschaft des Fahrzeugreifens (1) enthält.

4. Verfahren nach einem der vorhergehenden Ansprüche, **dadurch gekennzeichnet, dass** es sich bei der Ist-Reifeneigenschaft des Fahrzeugreifens (1) um eine Art des Fahrzeugreifens (1) und/oder um eine Profilart des Fahrzeugreifens (1) und/oder um einen Profilzustand des Fahrzeugreifens (1) und/oder um einen Lastindex des Fahrzeugreifens (1) und/oder um einen Geschwindigkeitsindex des Fahrzeugreifens (1) handelt.

5. Verfahren nach dem vorhergehenden Anspruch, **dadurch gekennzeichnet, dass** eine Information über die Art des Fahrzeugreifens (1) und/oder über die Profilart des Fahrzeugreifens (1) und/oder über den Profilzustand des Fahrzeugreifens (1) und/oder über den Lastindex des Fahrzeugreifens (1) und/oder den Geschwindigkeitsindex des Fahrzeugreifens (1) von einer Sensorvorrichtung (5) des Fahrzeugreifens (1) oder von einer Reifenidentifikationsvorrichtung (8) des Fahrzeugreifens (1) an die Auswertevorrichtung (3) übertragen wird.

6. Verfahren nach einem der vorhergehenden Ansprüche, **dadurch gekennzeichnet, dass** es sich bei der Eigenschaft der Umgebung (4) des Fahrzeugreifens (1) um eine Wetterbedingung am Ort des Fahrzeugreifens (1) handelt.

7. Verfahren nach dem vorhergehenden Anspruch, **dadurch gekennzeichnet, dass** die Wetterbedingung in Abhängigkeit von Wetterdaten bestimmt wird, wobei die Wetterdaten an die Auswertevorrichtung (3) übertragen werden.

8. Verfahren nach Anspruch 6 oder 7, **dadurch gekennzeichnet, dass** die Wetterbedingung in Abhängigkeit einer sensorischen Messung einer Temperatur am Ort des Fahrzeugreifens (1) und/oder einer Luftfeuchtigkeit am Ort des Fahrzeugreifens (1) mittels einer Umweltsensorvorrichtung (7) bestimmt wird und ein Signal von der Umweltsensorvorrichtung (7) an die Auswertevorrichtung (3) übertragen wird, wobei dieses Signal eine Information über die sensorische Messung der Temperatur am Ort des Fahrzeugreifens (1) und/oder der Luftfeuchtigkeit am Ort des Fahrzeugreifens (1) enthält.

9. Verfahren nach einem der Ansprüche 6 bis 8, **dadurch gekennzeichnet, dass** die Wetterbedingung in Abhängigkeit des Ortes des Fahrzeugreifens (1) und eines Zeitpunktes, für den die Wetterbedingung bestimmt werden soll, bestimmt wird.

10. Verfahren nach einem der vorhergehenden Ansprüche, **dadurch gekennzeichnet, dass** es sich bei der Eigenschaft der Umgebung (4) des Fahrzeugreifens (1) um eine Geschwindigkeit eines Fahrzeugs (2), an dem der Fahrzeugreifen (1) verwendet wird, handelt

11. Verfahren nach dem vorhergehenden Anspruch, **dadurch gekennzeichnet, dass** die Geschwindigkeit des Fahrzeugs (2), an dem der Fahrzeugreifen (1) verwendet wird, in Abhängigkeit globaler Positionierungsdaten des Fahrzeugs (2), an dem der Fahrzeugreifen (1) verwendet wird, bestimmt wird.

12. Verfahren nach einem der vorhergehenden Ansprüche, **dadurch gekennzeichnet, dass** es sich bei der Eigenschaft der Umgebung (4) des Fahrzeugreifens (1) um eine Radlast, um eine Achslast und/oder um eine Gesamtmasse des Fahrzeugs (2), an dem der Fahrzeugreifen (1) verwendet wird, handelt.

13. Verfahren nach einem der vorhergehenden Ansprüche, **dadurch gekennzeichnet, dass** in Abhängigkeit der Information über das Vergleichen der Ist-Reifeneigenschaft mit der Eigenschaft der Umgebung (4) des Fahrzeugreifens (1) eine Soll-Reifeneigenschaft des Fahrzeugreifens (1) bestimmt wird.

14. Verfahren nach einem der vorhergehenden Ansprüche, **gekennzeichnet durch** den weiteren Schritt:
- Aussenden eines Signals mittels der Auswertevorrichtung (3) in Abhängigkeit der Information über das Vergleichen der Ist-Reifeneigenschaft mit der Eigenschaft der Umgebung (4) des Fahrzeugreifens (1), wobei das Signal die Information über das Vergleichen der Ist-Reifeneigenschaft mit der Eigenschaft der Umgebung (4) des Fahrzeugreifens (1) enthält, wobei das Signal insbesondere für den Fall, wonach in Abhängigkeit der Information über das Vergleichen der Ist-Reifeneigenschaft mit der Eigenschaft der Umgebung (4) des Fahrzeugreifens (1) eine Soll-Reifeneigenschaft des Fahrzeugreifens (1) bestimmt worden ist, auch eine Information über die Soll-Reifeneigenschaft enthält.

15. Verfahren nach dem vorergehenden Anspruch, **gekennzeichnet durch** den weiteren Schritt:
- Empfangen des Signals mittels einer Verarbeitungsvorrichtung (6), wobei die Verarbeitungsvorrichtung (6) eingerichtet ist, die Soll-Reifeneigenschaft des Fahrzeugreifens (1) in Abhängigkeit des Signals herbeizuführen;
- Herbeiführen der Soll-Reifeneigenschaft mittels der Verarbeitungsvorrichtung (6).

16. Verfahren nach dem vorhergehenden Anspruch, **dadurch gekennzeichnet, dass** es sich bei der Verarbeitungsvorrichtung (6) um eine Vorrichtung zur Veränderung eines Drucks in dem Innenraum des Fahrzeugreifens (6) handelt.
